# EUROPEAN PATENT SPECIFICATION

(11) **EP 2 738 839 B1**
(45) Date of publication and mention of the grant of the patent: **12.08.2015**
(21) Application number: 12194882.2
(22) Date of filing: 29.11.2012
(51) Int. Cl.: H01M 4/36, H01M 4/04, H01M 4/485, H01M 4/48, H01M 4/02

(54) **Flexible electrode of an electrochemical cell**
Flexible Elektrode einer elektrochemischen Zelle
Électrode souple d'une cellule électrochimique

(43) Date of publication of application: 04.06.2014
(73) Proprietor: The Swatch Group Research and Development Ltd., 2074 Marin (CH)
(72) Inventor: Stalder, Michael, 2503 Bienne (CH); Züllig, Frédy, 2800 Delémont (CH); Mettan, Yoann, 1902 Evionnaz (CH)
(74) Representative: Ravenel, Thierry Gérard Louis

(56) References cited:
- EP-A1- 2 395 580
- EP-A2- 2 472 653
- WO-A1-97/12410
- US-A1- 2009 169 725

## Description

### Field of the Invention

The present invention relates to the field of electrochemical cells and in particular to electrodes of electrochemical cells. Moreover, the invention relates to film batteries featuring a large degree of mechanical flexibility and storage capacity and to a method of manufacturing electrodes for electrochemical cells.

### Background and Prior Art

Among a multitude of different battery types, there exist so-called film batteries. Those batteries are composed of thin materials with thickness in the range of nanometers or micrometers, allowing a total battery thickness in the range of 1 mm or less. So they may exhibit small dimensions and are therefore applicable to a large spectrum of different applications. Generally, such batteries or electrochemical cells can be formed into any arbitrary shape. They can be stacked, used in parallel and generally provide a comparatively large energy density.

Thin electrochemical cells may also provide a particular mechanical flexibility. Hence, they are typically bendable and elastically deformable to a certain degree. This property is of prime importance for reliable portable products subject to mechanical stress, like smart cards, etc...

Electrochemical cells typically comprise an anode, an anode current collector, a cathode, a cathode current collector , a separator extending between anode and cathode and an electrolyte. Moreover and in order to provide a desired mechanical flexibility, anode and cathode current collectors but also the electrodes sandwiched there between have to provide corresponding flexible properties.

Secondary batteries, such as lithium ion batteries typically comprise current collectors in contact with electrodes. One of the electrodes, typically the cathode, comprises an electroactive material, such like LiCoO₂ or LiFePO₄, provided in powdery form or in form of agglomerates of nanoparticles. Additionally, the composite material of such electrodes also comprises a conductive additive, typically in form of graphite particles or carbon black for optimizing and improving the electrical conductivity of the electrode.

Additionally, a binder is provided for keeping the components of the electrode composite together in a mechanically stable structure. Typically, polymeric binders, such like PVDF or CMC are substantially electrically insulating and may therefore degrade the electrical conductivity of the electrode.

Moreover, conventional electrodes are rather prone and sensitive to bending. Most commercially available electrodes exhibit deteriorations, like fissures or cracks at least on their surface when bended multiple times, leading to an abrupt loss of electrical performance. Another common deterioration path of conventional electrodes is the abrasion of the powdery material, leading to a gradual loss of electrical performance.

It is therefore an object of the present invention to provide an improved electrode for an electrochemical cell and a respective electrochemical cell being less prone and less sensitive to repeated bending or folding operations. In another object, the invention should provide an improved electrochemical cell with an increased volumetric energy density. Moreover, the internal structure of the electrochemical cell should be rather simple, compact and its production should be cost efficient.

### Summary of the invention

In a first aspect, the present invention relates to an electrode of an electrochemical cell. The electrode comprises a fibrous electroactive material. Hence, the electrically active material of the electrode (the cathode and/or the anode) is provided in fibrous form. The fibrous active electrode material, also designated as fibrous electroactive material, is therefore operable to conduct and react with positively charged ions and electrons, or at least interact with positively charged ions and electrons. Moreover, the fibers forming the electroactive material are arranged to form a nonwoven or felt-like self-supporting structure.

By arranging the fibrous active electrode material in a nonwoven or nonwoven fabric-like way, a mechanically stable and self-supporting structure of an electrode can be attained without any binder. Hence, the overall conductivity of the electrode is no longer degraded by a binder component. Therefore, use of electric conducting additives is neither required. Moreover, the electrode may not only comprise one type of fibrous active electrode material but may include several different fibrous active electrode materials arranged to form a nonwoven or felt-like self-supporting structure. In this way, an electrode can be obtained comprising a purely fibrous active electrode material without any further additives. Conductive additives can nevertheless be useful in the case of a fibrous material with low electrical conductivity.

Use of the fibrous active electrode material is not only beneficial in terms of a particular thin or filigree arrangement but may also provide a desired elasticity and flexibility of the entire electrode. The nonwoven or felt-like self-supporting structure of fibrous active electrode material allows for a wear resistant bending and flexing of the electrode even at a comparatively small bending radius. Moreover fibrous nonwoven electrodes are far less prone to abrasion than granular materials.

In a preferred embodiment, the fibers of the active electrode material comprise a mean fiber length comprised within the range of 2 µm to 200 µm and preferably; comprised within the range of 5 to 100 µm and in a more preferred embodiment within a the range of 10 µm to 50 µm.

In a further embodiment, the fibers of the active electrode material comprise a mean fiber diameter which ranges between 10 nm and 400 nm and preferably between 50 nm and 250 nm and more preferably between 100 and 200 nm.

With the given mean fiber length and mean fiber diameter, the fibers of the active electrode material may mechanically engage or interlace to form a mechanically stable self-supporting structure even without use of a binder.

In a further preferred embodiment, the mean aspect ratio, hence the average ratio of the length of the fibers and the diameter of the fibers ranges between 20 and 1000, preferably between 50 and 200 and more preferably between 100 and 150.

Experiments have revealed, that mean fiber lengths ranging between 10 µm and 50 µm and mean fiber diameters smaller than 100 or 200 nm together with a mean aspect ratio of ranging between 50 or 150 provides a mechanically stable self-supporting structure when the fibers are substantially isotropically arranged in a nonwoven or felt-like way. Mechanical interaction and friction as well as elastic properties of the fibers of the active electrode material provide a bendable and flexible but also mechanically stable and robust electrode structure.

In a further preferred embodiment, the composition of the electrode comprises 100 wt.-% of the fibrous active material but at least 50 wt.-%, together with at least a filler material. The filler material may be a conductive material required for enhancing the efficiency of the electrode depending on its application. For example if the fibrous active material is vanadium pentoxide and the power required is of the order of 1 mW, the filler material may be carbon in a range of 5wt.% to 20wt. The filler may comprise different electro active materials, preferably in a powder form. In this respect, the size of the powder particles of the filler materials will be chosen so as to fill the gaps with the fibrous active material thereby improving the performance of the electrochemical cell including the electrode of the invention.

In effect, the composition of the electrode may even substantially consist of the at least one fibrous active electrode material or of a mixture of several fibrous active electrode materials. Since the fibrous active electrode material inherently comprises a comparatively low electrical resistivity, neither an electrically conducting additive nor a binder is required to form said electrode.

In a further preferred embodiment, the electrode comprises a thin film or sheet-like structure having a thickness between 1 µm and 150 µm. Alternatively, the thickness of the electrode may range between 10 µm and 80 µm or between 20 µm and 60 µm. The comparatively film-like or sheet-like structure of the electrode allows for a rather compact design of the electrode and correspondingly of a respective electrochemical cell. Moreover, a film-like or sheet-like structure is generally beneficial in terms of bending or flexing since internal mechanical tension can be kept in a low or moderate level.

According to another preferred embodiment, the composition of the electrode is substantially binder free. Since mechanical stability of the self-supporting structure can be exclusively provided by the nonwoven or felt-like arrangement of the fibrous active electrode material, a binder as required for conventional electrode composites becomes superfluous.

Furthermore and according to another preferred embodiment, the electrode forms or comprises a cathode and comprises a vanadium oxide, and/or molybdenum oxide and/or another transition metal oxide as fibrous active electrode material or a mixture thereof. Preferably, the fibrous active electrode material may comprise H₂V₃O₈ or comparable vanadium oxides with a high ionic and electronic conductivity. In particular H₂V₃O₈ can be obtained in form of microfibers having a mean diameter between 100 and 200 nm and a mean fiber length of more than 10 µm. First experiments have already revealed that H₂V₃O₈ microfibers are suitable to form a self-supporting nonwoven or felt-like isotropic structure to serve as a flexible cathode for an electrochemical cell. In the particular case of a secondary Li-ion battery, a lithiated material can also be used, with the general formula H₂₋ₓLi_{y}V₃O₈, where 0≤x≤2 and 0≤y≤1.

Alternatively, the electrode may form or may comprise an anode and may have a carbon-based, metal-based and/or titanium oxide-based fiber or tubes as fibrous active electrode material. Here, a carbon-based fibrous active electrode material may comprise or may consist of carbon nanotubes. The metal based fiber may be for example lithium or another metal able to form an alloy with lithium during charging in the case of a Li-ion battery application.

In a further preferred embodiment, the electrode is substantially kink-free bendable to a bending radius smaller than or equal to 20 mm, 15 mm or even smaller than or equal to 10 mm. Such a comparatively small bending radius is particularly attainable by the nonwoven structure of the fibrous active electrode material.

Furthermore and according to another aspect also an electrochemical cell is provided comprising an anode in contact with an anode current collector and further comprising a cathode in contact with a cathode current collector. Moreover, the electrochemical cell comprises a separator sandwiched or disposed between the anode and the cathode. Furthermore, the anode is disposed between the separator and the anode current collector and the cathode is disposed between the separator and the cathode current collector. At least one of said anode and cathode comprises or is designed as an electrode as described above comprising at least a fibrous active electrode material, wherein the fibers of said material are arranged to form a nonwoven or felt-like self-supporting structure.

By providing an electrochemical cell having at least one or even two electrodes of a nonwoven or felt-like self-supporting structure made of fibrous active electrode material, overall flexibility of the electrochemical cell can be improved. Additionally, the geometrical size and overall dimensions of the electrochemical cell can be reduced and the electric or electrochemical properties of the electrodes can be improved.

In a further embodiment, the electrochemical cell is designed as a primary or secondary battery. The electrochemical cell may be particularly designed for various application purposes. In particular, the electrochemical cell may be applicable in a time piece or watch, in a smartcard or in a cellular phone.

According to another independent aspect also a method of manufacturing an electrode as described above is provided. The method comprises the steps of dispersing a fibrous active electrode material in a liquid, such as water, forming at least one layer of the fibrous active electrode material and separating the formed layer from the liquid. Said method may be in general comparable to making paper except that the fibrous material is an active electrode material to form an electrode of an electrochemical cell.

The at least one layer of the fibrous active electrode material may be formed by means of a filter substrate. For forming the at least one layer the filter substrate may be at least partially immersed in the dispersion of the liquid and the fibrous active electrode material to accumulate a layer of fibrous active electrode material thereon. Then, the filter substrate can be lifted out of the dispersion to separate the accumulated fibers and the liquid. The liquid can also be evacuated through the filter by means of a difference in pressure. Alternatively, the dispersion may be distributed across the filter substrate. The filter substrate typically comprises micropores of suitable size for allowing the liquid to escape. For varying and controlling the thickness of the fiber layer these steps may be repeated multiple times.

According to an alternative embodiment the layer may be formed on a non-adhesive support substrate or on a non-sticking support substrate. The dispersion provided and distributed across the support substrate may be exposed to thermal energy so that the liquid is evaporated. The residing nonwoven or felt-like structure of fibrous active electrode material may then be release or detached from the support substrate. Typically, the support substrate may comprise a non-sticking surface, e.g. made of polytetrafluoroethylene (PTFE).

### Brief description of the drawings

In the following, an embodiment of the invention will be described in detail by making reference to the drawings, in which:
Fig. 1 schematically illustrates an electrochemical cell,
Fig. 2 schematically shows the electrochemical cell according to Fig. 1 in cross-section and
Fig. 3 shows a microscopic illustration of the morphology of a nonwoven fiber-based electrode.

### Detailed description

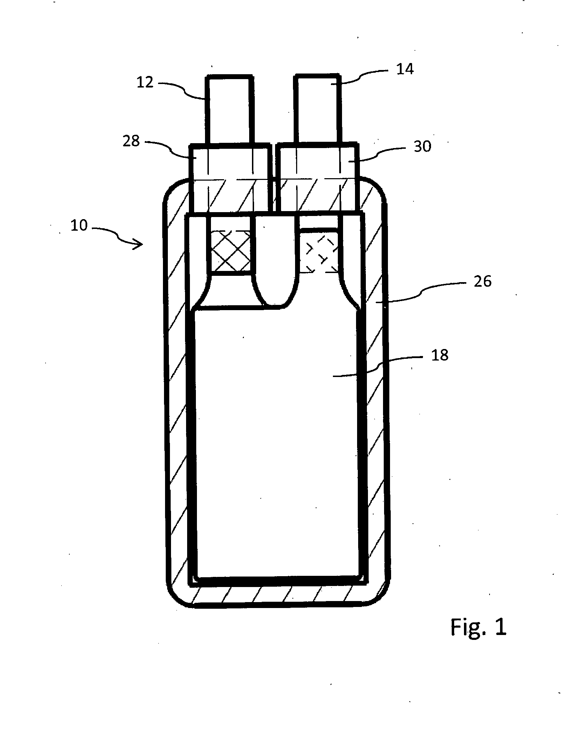

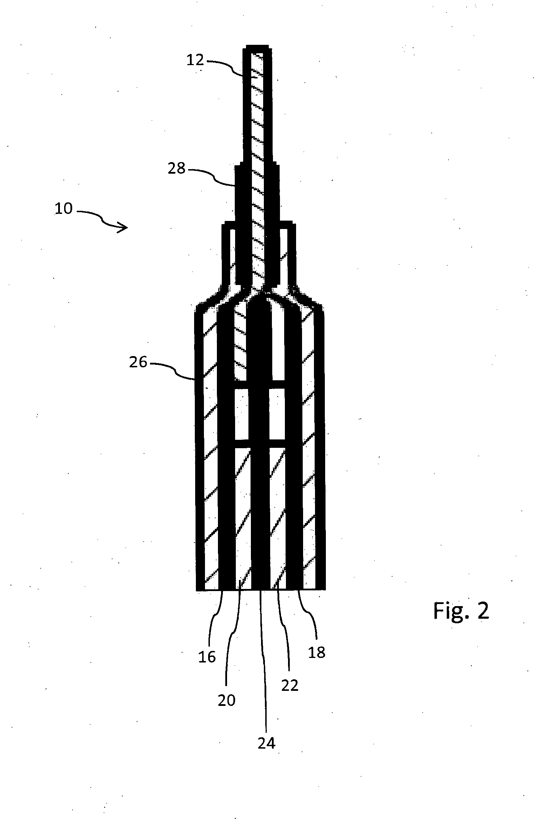

The electrochemical cell 10 as illustrated in Figs. 1 and 2 comprises a substantially planar-shaped cathode current collector 18 in contact with a cathode 22. Opposite the cathode current collector 18, the cathode 22 is in connection with a separator 24, in order to separate the cathode 22 from an anode 20. Hence, cathode 22 and anode 20 sandwich the separator 24 there between. The anode 20 is further in contact with an anode current collector 16 as illustrated in Fig. 2. The electrochemical cell further comprises an electrolyte filling the pores of the anode 20, of cathode 20 and separator 24 the structure of which will described hereinafter. The electrolyte can be formed for example by a mixture of ethylene carbonate and lithium hexafluoride. Typically separator 24 can be made of porous polypropylene.

The electrochemical cell further comprises an encapsulating housing 26 to receive the sandwiched assembly of anode current collector 16, anode 20, separator 24, cathode 22 and cathode current collector 18. As becomes apparent from the illustration according to Fig. 1, the current collector 18 is electrically connected with a connector tab 14. As further shown in Fig. 2, the current collector 16 is electrically connected with a connector tab 12. The connector tabs 12, 14 each extend through the encapsulating housing 26 by means of polymeric sleeves 28, 30.

At least one of the electrodes, the anode 20 and/or the cathode 22 comprises a fibrous active electrode material arranged in or forming a nonwoven or felt-like self-supporting structure. Consequently, the electrode is rather wear resistant in terms of bending or flexing, even when bent with a bending radius of less than 20 mm, less than 15 mm or even less than or equal to 10 mm. Experiments have revealed, that such electrodes 20, 22 can be bent and flexed to such a degree at least 500 times, 1000 times, 5000 times or even more without showing substantial wear or degradation with regard to their optical appearance, electrically conducting- or elastic properties.

In preferred embodiments, it is particularly the cathode 22 which comprises or which consists of the nonwoven or felt-like self-supporting fibrous active electrode material. Preferably, the electrode material comprises or consists of a vanadium oxide, such like H₂V₃O₈, or similar lithiated compounds with a general formula H₂₋ₓLi_{y}V₃O8, where 0≤x≤2 and 0≤y≤1.

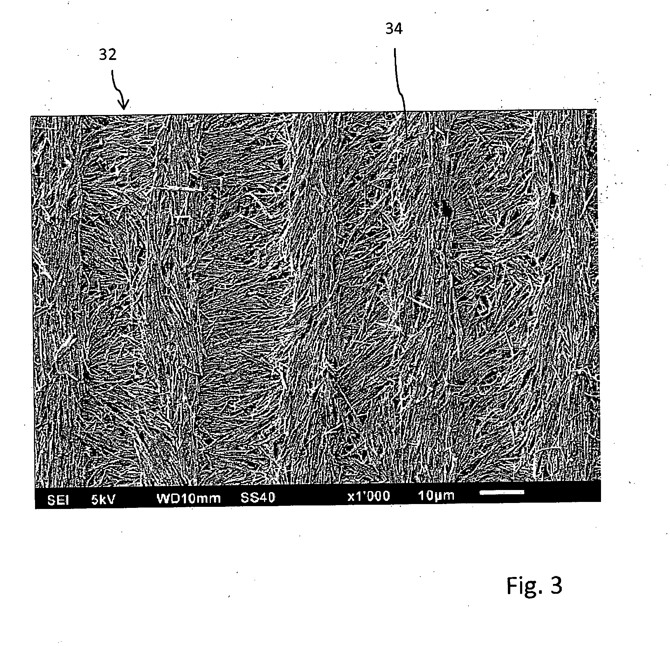

In Fig. 3, an electron microscopic picture of such a cathode is provided. As can be seen, the self-supporting nonwoven structure 32 is exclusively formed by a rather irregular and isotropic arrangement of fibers 34, typically exhibiting a mean fiber length of more than 10 µm and mean fiber diameter between 100 nm and 200 nm. Hence, the mean aspect ratio of the fibers is larger than or equal to 50 or even larger than or equal to 100.

### List of Reference Numerals

- 10: electrochemical cell
- 12: connector tab
- 14: connector tab
- 16: current collector
- 18: current collector
- 20: anode
- 22: cathode
- 24: separator
- 26: housing
- 28: sleeve
- 30: sleeve
- 32: nonwoven structure
- 34: fiber

## Claims

1. An electrode of an electrochemical cell, comprising at least a fibrous active electrode material, wherein the fibers (34) of the electroactive material are arranged to form a nonwoven or felt-like self-supporting structure (32).

2. The electrode according to claim 1, wherein the fibers (34) of the active electrode material comprise a mean fiber length comprised within the range of 2 µm to 200 µm.

3. The electrode according to claim 1, wherein the fibers (34) of the active electrode material comprise a mean fiber length comprised within the range of 5 to 100 µm.

4. The electrode according to claim 1, wherein the fibers (34) of the active electrode material comprise a mean fiber length comprised within a range of 10 µm to 50 µm.

5. The electrode according to any one of the preceding claims, wherein the fibers of the active electrode material comprise a mean fiber diameter which ranges between 10 nm and 400 nm.

6. The electrode according to any one of the preceding claims, wherein the fibers of the active electrode material comprise a mean fiber diameter which ranges between 50 nm and 250 nm.

7. The electrode according to any one of the preceding claims, wherein the fibers of the active electrode material comprise a mean fiber diameter which ranges y between 100 and 200 nm.

8. The electrode according to any one of the preceding claims, wherein the mean aspect ratio of the length of the fibers and the diameter of the fibers ranges between 20 and 1000.

9. The electrode according to any one of the preceding claims, wherein the mean aspect ratio of the length of the fibers and the diameter of the fibers ranges between 50 and 200.

10. The electrode according to any one of the preceding claims, wherein the mean aspect ratio of the length of the fibers and the diameter of the fibers ranges between 100 and 150.

11. The electrode according to any one of the preceding claims, wherein the composition of the electrode comprises at least 50 wt.-% of the fibrous active material the rest being a filler material.

12. The electrode according to claim 11, wherein the filler material includes carbon nanotubes.

13. The electrode according to any one of the claims 1 to 12, wherein the composition of the electrode comprises 100 wt.-% of the fibrous active material.

14. The electrode according to any one of the preceding claims comprising a film- or sheet-like structure having a thickness between 1 µm and 150 µm, or between 10 µm and 80 µm, or between 20 µm and 60 µm.

15. The electrode according to any one of the preceding claims, wherein the composition of the electrode is substantially binder free.

16. The electrode according to any one of the preceding claims, wherein the electrode is a cathode and wherein the fibrous active electrode material is chosen among the transition metal oxide.

17. The electrode according to claim 16 wherein the fibrous active material vanadium oxide and/or molybdenum oxide.

18. The electrode according to any one of claims 1 to 15, wherein the electrode is an anode and wherein the fibrous active electrode material is a carbon-based, metal-based and/or titanium oxide-based fiber or tubes.

19. The electrode according to any one of the preceding claims being substantially kink-free bendable up to a bending radius smaller than or equal to 20 mm, 15 mm or 10 mm.

20. An electrochemical cell, comprising
- an anode (20) in contact with an anode current collector (16),
- a cathode (22) in contact with a cathode current collector (18),
- a separator (24) disposed between the anode (20) and the cathode (22), wherein the anode (20) is disposed between the separator (24) and the anode current collector (16) and wherein the cathode (22) is disposed between the separator (24) and the cathode current collector (18),
- wherein at least one of anode (20) and cathode (22) comprises an electrode according to any one of the preceding claims.

21. The electrochemical cell according to claim 20 and being designed as a primary or secondary battery.

22. A method of manufacturing an electrode according to any one of the preceding claims 1 to 19, comprising the steps of:
- dispersing a fibrous active electrode material in a liquid,
- forming at least one layer of the fibrous active electrode material and
- separating the layer from the liquid.

23. The method according to claim 22, wherein the layer is formed on a porous filter substrate.

24. The method according to claim 22, wherein the layer is formed on a non-adhesive support substrate and wherein the liquid is evaporated.

## Patentansprüche

1. Elektrode einer elektrochemischen Zelle, die wenigstens ein faserförmiges aktives Elektrodenmaterial umfasst, wobei die Fasern (34) des elektroaktiven Materials angeordnet sind, um eine vliesartige oder filzartige selbsttragende Struktur (32) zu bilden.

2. Elektrode nach Anspruch 1, wobei die Fasern (34) des aktiven Elektrodenmaterials eine mittlere Faserlänge haben, die in dem Bereich von 2 µm bis 200 µm enthalten ist.

3. Elektrode nach Anspruch 1, wobei die Fasern (34) des aktiven Elektrodenmaterials eine mittlere Faserlänge haben, die in dem Bereich von 5 µm bis 100 µm enthalten ist.

4. Elektrode nach Anspruch 1, wobei die Fasern (34) des aktiven Elektrodenmaterials eine mittlere Faserlänge haben, die in dem Bereich von 10 µm bis 50 µm enthalten ist.

5. Elektrode nach einem der vorhergehenden Ansprüche, wobei die Fasern des aktiven Elektrodenmaterials einen mittleren Faserdurchmesser haben, der von 10 nm bis 400 nm reicht.

6. Elektrode nach einem der vorhergehenden Ansprüche, wobei die Fasern des aktiven Elektrodenmaterials einen mittleren Faserdurchmesser haben, der von 50 nm bis 250 nm reicht.

7. Elektrode nach einem der vorhergehenden Ansprüche, wobei die Fasern des aktiven Elektrodenmaterials einen mittleren Faserdurchmesser haben, der von 100 nm bis 200 nm reicht.

8. Elektrode nach einem der vorhergehenden Ansprüche, wobei das mittlere Längenverhältnis aus der Länge der Fasern und dem Durchmesser der Fasern von 20 bis 1000 reicht.

9. Elektrode nach einem der vorhergehenden Ansprüche, wobei das mittlere Längenverhältnis aus der Länge der Fasern und dem Durchmesser der Fasern von 50 bis 200 reicht.

10. Elektrode nach einem der vorhergehenden Ansprüche, wobei das mittlere Längenverhältnis aus der Länge der Fasern und dem Durchmesser der Fasern von 100 bis 150 reicht.

11. Elektrode nach einem der vorhergehenden Ansprüche, wobei die Zusammensetzung der Elektrode wenigstens 50 Gew.-% des faserförmigen aktiven Materials umfasst, wobei der Rest aus einem Füllmaterial besteht.

12. Elektrode nach Anspruch 11, wobei das Füllmaterial Kohlenstoff-nanoröhrchen umfasst.

13. Elektrode nach einem der Ansprüche 1 bis 12, wobei die Zusammensetzung der Elektrode 100 Gew.-% des faserförmigen aktiven Materials umfasst.

14. Elektrode nach einem der vorhergehenden Ansprüche, die eine folien- oder plattenartige Struktur umfasst, die eine Dicke im Bereich von 1 µm bis 150 µm, oder von 10 µm bis 80 µm oder von 20 µm bis 60 µm aufweist.

15. Elektrode nach einem der vorhergehenden Ansprüche, wobei die Zusammensetzung der Elektrode im Wesentlichen binderfrei ist.

16. Elektrode nach einem der vorhergehenden Ansprüche, wobei die Elektrode eine Kathode ist und wobei das faserförmige aktive Elektrodenmaterial aus den Übergangsmetalloxiden gewählt worden ist.

17. Elektrode nach Anspruch 16, wobei das faserförmige aktive Material Vanadiumoxid oder Molybdänoxid entspricht.

18. Elektrode nach einem der Ansprüche 1 bis 15, wobei die Elektrode eine Anode ist und wobei das faserförmige aktive Elektrodenmaterial kohlenstoffbasierten, metallbasierten oder titanoxidbasierten Fasern oder Röhrchen entspricht.

19. Elektrode nach einem der vorhergehenden Ansprüche, die im Wesentlichen bis zu einen Biegeradius von kleiner oder gleich 20 mm, 15 mm oder 10 mm knickfrei gebogen werden können.

20. Elektrochemische Zelle, die Folgendes umfasst:
- eine Anode (20), die sich in Kontakt mit einem Anodenstromabnehmer (16) befindet,
- eine Kathode (22), die sich in Kontakt mit einem Kathodenstromabnehmer (18) befindet,
- eine Trennvorrichtung (24), die zwischen der Anode (20) und der Kathode (22) angeordnet ist, wobei die Anode (20) zwischen der Trennvorrichtung (24) und dem Anodenstromabnehmer (16) angeordnet ist und wobei die Kathode (22) zwischen der Trennvorrichtung (24) und dem Kathodenstromabnehmer (18) angeordnet ist,
- wobei die Anode (20) oder die Kathode (22) eine Elektrode nach einem der vorhergehenden Ansprüche umfasst.

21. Elektrochemische Zelle nach Anspruch 20, die als eine primäre oder sekundäre Batterie entworfen ist.

22. Verfahren zum Herstellen einer Elektrode nach einem der vorher-gehenden Ansprüche 1 bis 19, das folgende Schritte umfasst:
- Auflösen eines faserförmigen aktiven Elektrodenmaterials in einer Flüssigkeit,
- Bilden mindestens einer Schicht aus faserförmigem aktivem Elektrodenmaterial
und
- Trennen der Schicht von der Flüssigkeit.

23. Verfahren nach Anspruch 22, wobei die Schicht auf einem porösen Filtersubstrat gebildet wird.

24. Verfahren nach Anspruch 22, wobei die Schicht auf einem nicht haftenden Trägersubstrat gebildet wird und wobei die Flüssigkeit verdampft wird.

## Revendications

1. Electrode d'une cellule électrochimique comprenant au moins un matériau d'électrode actif fibreux, dans laquelle les fibres (34) du matériau électro-actif sont agencées pour former une structure autoportante non tissée ou du type feutrée (32).

2. Electrode selon la revendication 1, dans laquelle les fibres (34) du matériau d'électrode actif présentent une longueur moyenne de fibre comprise entre 2 µm et 200 µm.

3. Electrode selon la revendication 1, dans laquelle les fibres(34) du matériau d'électrode actif présentent une longueur moyenne de fibre comprise entre sµm et 100µm.

4. Electrode selon la revendication 1, dans laquelle les fibres (34) du matériau d'électrode actif présentent une longueur moyenne de fibre comprise entre 10µm et 50µm.

5. Electrode selon l'une quelconque des revendications précédentes, dans laquelle les fibres du matériau d'électrode actif présentent un diamètre moyen de fibre compris entre 10 nm et 400 nm.

6. Electrode selon l'une quelconque des revendications précédentes, dans laquelle les fibres du matériau d'électrode actif présentent un diamètre moyen de fibre compris entre 50 nm et 250 nm.

7. Electrode selon l'une quelconque des revendications précédentes, dans laquelle les fibres du matériau d'électrode actif présentent un diamètre moyen de fibre compris entre 100 nm et 200 nm.

8. Electrode selon l'une quelconque des revendications précédentes, dans laquelle le rapport d'aspect moyen de la longueur des fibres et du diamètre des fibres est compris entre 20 et 1000.

9. Electrode selon l'une quelconque des revendications précédentes, dans laquelle le rapport d'aspect moyen de la longueur des fibres et du diamètre des fibres est compris entre 50 et 200.

10. Electrode selon l'une quelconque des revendications précédentes, dans laquelle le rapport d'aspect moyen de la longueur des fibres et du diamètre des fibres est compris entre 100 et 150.

11. Electrode selon l'une quelconque des revendications précédentes, dans laquelle la composition de l'électrode comprend au moins 50% en poids de matériau actif fibreux, le reste étant un matériau de remplissage.

12. Electrode selon la revendication 11, dans laquelle le matériau de remplissage comprend des nanotubes de carbone.

13. Electrode selon l'une quelconque des revendications précédentes, dans laquelle la composition de l'électrode comprend 100% en poids de matériau actif fibreux.

14. Electrode selon l'une quelconque des revendications 1 à 12, comprenant une structure en film ou en feuille ayant une épaisseur comprise entre 1 µm et 150 µm ou entre 10 µm et 80 µm ou entre 20 µm et 60µm.

15. Electrode selon l'une quelconque des revendications précédentes, dans laquelle la composition de l'électrode est sans sensiblement sans liant.

16. Electrode selon l'une quelconque des revendications précédentes, dans laquelle l'électrode est une cathode et dans laquelle le matériau d'électrode actif fibreux est choisi parmi les oxydes de métaux de transition.

17. Electrode selon la revendication 16, dans laquelle le matériau actif fibreux est l'oxyde de vanadium et/ou l'oxyde de molybdène.

18. Electrode selon l'une quelconque des revendications 1 à 15, dans laquelle l'électrode est une anode et dans laquelle le matériau d'électrode actif fibreux sont des fibres ou tubes à base de carbone, à base de métal et /ou à base d'oxyde titane.

19. Electrode selon l'une quelconque des revendications précédentes, sensiblement exempte de plis et qui peut fléchir jusqu'à un rayon de flexion inférieur ou égale à 20 mm, 15 mm ou 10 mm.

20. Cellule électrochimique comprenant
- une anode (20) en contact avec un collecteur de courant d'anode (16),
- un cathode (22) en contact avec un collecteur de courant de cathode (18),
- un séparateur (24) disposé entre l'anode (20) et la cathode (22), dans laquelle l'anode (20) est disposée entre le séparateur (24) et le collecteur de courant d'anode (16) et dans laquelle la cathode (22) est disposée entre le séparateur (24) et le collecteur de courant de cathode (18),
- dans laquelle au moins l'anode (20) ou la cathode (22) comprend une électrode selon l'une quelconque des revendications précédentes.

21. Cellule électrochimique selon la revendication 20 conçue en tant que batterie primaire ou secondaire.

22. Procédé de fabrication d'une électrodes selon l'une quelconque des revendications 1 à 19 comprenant les étapes de :
- disperser un matériau d'électrode actif fibreux dans un liquide,
- former au moins une couche de matériau d'électrode actif fibreux et
- séparer la couche du liquide.

23. Procédé selon la revendication 22, dans lequel la couche est formée sur un substrat de filtre poreux.

24. Procédé selon la revendication 22, dans lequel la couche est formée sur un substrat de support non adhésif et dans lequel le liquide est évaporé.
